# EUROPEAN PATENT APPLICATION

(11) **EP 3 121 296 A1**
(43) Date of publication of application: **25.01.2017**
(21) Application number: 15764365.1
(22) Date of filing: 12.03.2015
(51) Int. Cl.: C22B 11/02, B22F 1/00, B22F 9/00, C22B 7/00, H01B 1/22, H01B 13/00

(54) **METHOD FOR RECOVERING METAL POWDER FROM PLATINUM PASTE AND METHOD FOR REGENERATING PLATINUM PASTE**

(30) Priority: 20.03.2014 JP 2014057824
(71) Applicant: Tanaka Kikinzoku Kogyo K.K., Chiyoda-ku Tokyo 100-6422 (JP)
(72) Inventor: OKAMOTO, Nobuhisa, Hiratsuka-shi Kanagawa 254-0076 (JP); HOSOI, Takuya, Hiratsuka-shi Kanagawa 254-0076 (JP); SAKAIRI, Koichi, Hiratsuka-shi Kanagawa 254-0076 (JP)
(74) Representative: Weickmann & Weickmann PartmbB
(86) International application number: PCT/JP2015/057260
(87) International publication number: WO 2015/141550

(57) **Abstract**

The present invention relates to a technique for recovering and recycling a platinum paste. The present invention provides a method for recovering a metal powder from a platinum paste formed by mixing a solid component composed of a metal powder including at least a platinum powder or a platinum alloy powder and an organic component including at least an organic solvent, the method including removing the organic component by heating the platinum paste at a recovery temperature set in a temperature range of 300°C or higher and 500°C or lower. The recovered metal powder can be recycled into a platinum paste equivalent to a new product by mixing the metal powder with a solvent etc.

## Description

### Technical Field

The present invention relates to a method for recovering a metal powder from a platinum paste, in which a platinum powder or a platinum alloy powder as the metal powder is dispersed in a solvent, to recycle the metal powder into a platinum paste. Particularly, the present invention relates to a method in which a platinum paste etc. degraded by a change with time is subjected to a treatment to recover from the platinum paste etc. a metal powder having properties equivalent to those in the initial stage of production.

### Background Art

Platinum pastes have been heretofore used in formation of electrodes such as sensor electrodes for various kinds of gas sensors, and heater electrodes. The platinum paste is obtained by dispersing in an organic solvent a metal powder composed of platinum or a platinum alloy, and appropriately adding additives such as a resin and a surfactant to the dispersion.

A user involved in production of electrodes etc. from a platinum paste commonly purchases an abundant amount of a platinum paste from a manufacturer, and an unused part of the platinum paste is stored. The platinum paste thus stored is degraded if the storage period is long, while there is no problem if the storage period of the platinum paste is short. The factor of degradation of the unused platinum paste due to long period storage may be degeneration of a solvent by catalytic action of platinum or a platinum alloy as well as volatilization of the solvent, and a specific phenomenon may be such a change that drying after application of the platinum paste becomes hard to proceed, or the viscosity of the paste decreases or increases.

A degraded platinum paste as described above has a certain limit on the set range of the drying temperature after application of the platinum paste, and the paste which became hard to dry is no longer usable and must be discarded. An increase in viscosity of the paste can be coped with by adding a solvent, but the viscosity once reduced is difficult to increase, and therefore the paste is to be discarded. The degraded platinum paste to be discarded is subjected to a recovery and refinement treatment for recycling platinum. Here, as a method for recovering and refining platinum from a platinum paste, the platinum paste is fired to obtain a platinum ingot, which is dissolved in an acid solution or the like, and a platinum base metal is then separated and extracted.

A method for recovering platinum from a platinum ingot after firing a platinum paste is disclosed in detail in, for example, Patent Document 1. The recovered and refined platinum base metal can be reused as a metal powder for the platinum paste. In this case, the platinum base metal is converted into a platinum salt, and then turned into a solution, which is subjected to a reduction treatment to precipitate a platinum powder, and further, the platinum powder is subjected to granulation treatment to adjust the particle size, followed by mixing an organic solvent etc. to recycle the platinum powder into a platinum paste.

### Related Art Document

### Patent Documents

Patent Document 1: JP 2007-308797 A

### Summary of the Invention

### Problems to be Solved by the Invention

However, passing through a large number of steps as described above for recycling of a degraded platinum paste may be inefficient. In the steps of firing, dissolution and metal extraction, not a little metal loss occurs. In such a process which has a large number of steps and may cause a metal loss, the recycling cost is increased to reduce the benefit of recycling.

Here, when consideration is given to improvement of the efficiency of recycling of a platinum paste, directly recovering a metal powder from the platinum paste may be most reasonable, if possible. As a technique for recovering a metal powder, one that is available not only for a degraded platinum paste but also for a platinum paste which is not degraded but must be discarded by reasons such as being a remnant in an insufficient amount may be a more useful technique for resource utilization.

The present invention was made based on the above background, and provides a technique for recovering a metal powder from a platinum paste containing a platinum powder or a platinum alloy powder as a metal powder. This purpose is based on the premise that the present invention can recover a metal powder having properties equivalent to those in the production process of a platinum paste to be recovered.

### Means for Solving the Problems

For reconfirming the configuration of a platinum paste, the platinum paste includes a metal powder composed of platinum or a platinum alloy, and an organic component such as an organic solvent or a resin. The metal powder and the organic component have considerably different thermal behaviors. An organic substance is decomposed and volatilized at a relatively low temperature, whereas platinum and an alloy thereof are not fired and eliminated even at a high temperature. Accordingly, it is supposed that only the metal powder can be separated from the platinum paste by a thermal treatment.

Of course, simply heating the platinum paste at a high temperature is not necessarily practical. The particle size, the particle size distribution, the specific surface area and the like of the metal powder in the platinum paste are adjusted beforehand according to the use and required properties of the platinum paste, and changing these properties by heating comes to nothing. This is because the recovered metal powder cannot be reused as a paste raw material. In this respect, heating under an easy temperature setting is not appropriate because a change in particle size etc. of the metal powder is caused by heating.

Further, it can be supposed that the organic component in the platinum paste is decomposed at a relatively low temperature, but this supposition is only based on the physical properties of a solvent, a resin or the like that is not degraded. In degradation of the platinum paste, a change occurs in drying property, viscosity and the like, and the organic component may be accordingly degenerated. Physical properties may be changed from those before degradation to cause a situation in which, for example, decomposition does not occur at an expected temperature and resides are left.

The present inventors have extensively conducted studies considering the above matters, and found that by heating a platinum paste in a precisely defined temperature range, a metal powder free from a change in properties can be recovered while completely removing an organic substance derived from a solvent etc. The thus-recovered metal powder can be recycled into a platinum paste equivalent to that at the time of production by mixing the metal powder with a solvent etc.

The present invention provides a method for recovering a metal powder from a platinum paste formed by mixing a solid component composed of a metal powder including at least a platinum powder or a platinum alloy powder and an organic component including at least an organic solvent, including the steps of removing the organic component by heating the platinum paste at a recovery temperature set in a temperature range of 300°C or higher and 500°C or lower.

Hereinafter, a method for recovering a platinum powder from a platinum paste of the present invention will be described. First, in the platinum paste covered by the present invention, a metal powder including at least platinum or a platinum alloy as the solid component, and at least a solvent as the organic component are essential constituent components.

The present invention is applied to a metal paste containing a platinum powder or a platinum alloy powder as a metal powder (in this specification, the platinum powder or platinum alloy powder may be collectively referred to as a platinum powder for the sake of convenience.). Preferably, the platinum powder is composed of platinum having a purity of 99% by mass or more. Preferably, the platinum alloy powder is composed of a platinum alloy having a platinum content of 40% by mass or more and less than 100% by mass. Preferably, the platinum alloy is a platinum-palladium alloy, a platinum-gold alloy, a platinum-silver alloy, a platinum-rhodium alloy or a platinum-iridium alloy. Whether a platinum powder or a platinum alloy powder is selected as the metal powder depends on the use and required properties of the platinum paste. For example, in uses which require a reduction in resistance of sensor electrodes, lead wire electrodes and the like, with priority, a platinum powder having a low resistance is selected. On the other hand, in uses of heater electrodes etc., a platinum alloy powder having a resistance temperature coefficient (TCR) is applied. As long as the temperature in heating during recovery is in the above range, the platinum and platinum alloy powders can be recovered while having almost no morphological change and maintaining the particle size and surface area at the time of producing the paste. The average particle size of the metal powder, which is particularly suitable for the present invention, is 0.05 µm to 5 µm. Since a metal powder having a smaller particle size generally tends to be more easily sintered at a low temperature, there is a risk that recovery may be difficult when the paste has an extremely fine metal powder.

For the solvent in which a solid component such as a metal powder is dispersed, a platinum paste using a solvent that has been used heretofore can be targeted. Specifically, organic solvents which are commonly used in a platinum paste, such as ethylene glycol (boiling point: 197.3°C), propylene glycol (boiling point: 188.2°C), ethylene glycol monophenyl ether (boiling point 245°C), benzyl alcohol (boiling point: 205°C), kerosene (boiling point: 150 to 200°C), γ-butyrolactone (boiling point: 204°C), N-methylpyrrolidone (boiling point: 204°C), butyl carbitol (boiling point: 230), butyl carbitol acetate (boiling point 247°C), terpin oil (boiling point: 149 to 180°C), α-terpineol (boiling point 218°C), texanol (boiling point: 244 to 247°C), menthanol (boiling point: 200 to 220°C) and menthanol acetate (boiling point: 222°C) can be applied. These organic solvents have a boiling point within a range of 150 to 250°C, and can be removed by heating at 300°C to 500°C even when physical properties are varied due to degradation.

A resin and a surfactant are often added to the organic component of the platinum paste for the purpose of adjusting the viscosity and imparting thixotropy, and even when such additives are contained, the present invention is effective. The resin to be added is generally a cellulose derivative, a butyral resin, a polyvinyl acetate resin, an amino-based resin, an alkyd resin or the like. The surfactant is an anionic surfactant, a nonionic surfactant, a cationic surfactant or the like. The organic component can be decomposed by heating at 300°C or higher due to the catalytic action of platinum.

Further, the platinum paste covered by the present invention may contain a solid other than the metal powder as the solid component. As a metal paste for formation of an electrode, for example, one containing a ceramic powder of alumina (Al₂O₃), zirconia (ZrO₂) or the like is often used. A platinum powder can also be recovered from the platinum paste containing the ceramic powder. The ceramic powder is a heat-resistant material which is not changed even at a paste firing temperature, and at a temperature of 500°C or lower for recovering the metal powder, the ceramic powder can be recovered as it is like the metal powder.

As other solid components, insoluble particles such as a carbon powder and a diamond powder may be added to the platinum paste so that the electrode after firing is porous. Such a platinum paste can be covered. These solid components are fired and eliminated at a paste firing temperature, but are not changed and can be recovered at 500°C or lower.

In the method for recovering a platinum powder from a platinum paste of the present invention, the platinum paste is heated at a recovery temperature set within a range of 300°C or higher and 500°C or lower, so that an organic component is eliminated and removed to recover the metal powder. Here, by setting the recovery temperature to a temperature of 300°C or higher and 500°C or lower, the organic component can be completely removed, and also, the particle size etc. of the metal powder can be maintained to recover the metal powder in a reusable state.

The intent of setting the recovery temperature in the above range will be described in detail. The lower limit of 300°C is intended for removal of all of the organic component (solvent and resin). A common solvent used in the platinum paste has a boiling point around 200°C (150 to 250°C). Accordingly, when the platinum paste is heated at a temperature in the above range, the solvent is completely volatilized and removed. On the other hand, studies by the present inventors show that the resin is fired and eliminated by heating at 300°C or higher although it is not volatile in general.

The lower limit of the recovery temperature, which is set to 300°C to remove all of the organic component as described above takes degradation of the platinum paste into consideration. In the degraded platinum paste, some change occurs in the solvent and resin, and physical properties may also be changed from those at the time of production. According to the present inventors, even when there is such a change in physical properties, the organic component can be completely removed by heating at 300°C or higher. The reason considered is that the catalytic action of platinum (platinum alloy) that forms the metal powder accelerates oxidation and decomposition of the organic component.

On the other hand, by setting the upper limit of the recovery temperature to 500°C, a change in particle size etc. of the platinum powder or platinum alloy powder is prevented. In a temperature range above 500°C, sintering of the platinum powder is started to change the particle size etc. The platinum powder having such a change in properties cannot be used as a constituent material of the platinum paste, and is made reusable only by passing through a large number of steps including dissolution etc. The heating temperature is more preferably 450°C or lower for maintaining the properties of the platinum powder or platinum alloy powder described above.

In the heating step for recovering the metal powder, the platinum paste is heated at a temperature elevation rate of 5 to 20°C/min to a recovery temperature set within the above temperature range, and is held at the set temperature, preferably. The time during which the platinum paste is held at the recovery temperature is determined according to the amount of the solvent and resin, but is preferably 5 to 60 minutes. The heating atmosphere is not particularly limited as long as it is an oxidizing atmosphere for oxidization and decomposition of the resin although it is convenient to perform the heating in the air.

Two-stage heating may be performed in which before heating at the recovery temperature (300 to 500°C), the platinum paste is preliminarily heated at 100 to 200°C, and then heated at the recovery temperature. In the organic component in the platinum paste, the solvent and the resin are volatilized and decomposed at different temperatures. By performing two-stage heating in which the solvent is volatilized in a low temperature range, and the resin is then fired and eliminated, explosive boiling in the paste can be prevented. The two-stage heating also has the effect of preventing combustion of the solvent by the catalytic action of platinum. The time of the preliminary heating is preferably 5 to 60 minutes.

As a result of heating at the above recovery temperature, the organic component is volatilized and decomposed to be eliminated, and accordingly, the metal powder (platinum powder or platinum alloy powder) is recovered from the platinum paste. Solid components such as a ceramic powder and insoluble particles may be recovered.

As the platinum paste covered by the present invention, a platinum paste which has the above components and is in a degraded state is particularly useful. The specific form of the platinum paste in a degraded state corresponds to at least one of (a) a platinum paste in which the viscosity is changed by ±20% or more with respect to the viscosity at the time of production, (b) a platinum paste in which one or both of the viscosity ratio of 0.4/s to 4/s (η0.4/η4) or the viscosity ratio of 4/s to 20/s (η4/η20) as measured by Brookfield viscometer are changed by 10% or more with respect to the viscosity ratio at the time of production, and (c) a platinum paste in which the solid component content is changed by ±2% or more with respect to the solid component content at the time of production. Such a degraded state is presented when the platinum paste is stored in an unused state for a long time, and the storage conditions (temperature, whether or not shielded from light, storage period) are not particularly limited. The platinum paste may come into the above-mentioned state even in storage at room temperature. In the present invention, the "time of production" serving as a reference of whether or not degradation occurs means 24 hours or less after components such as a platinum powder and a solvent are mixed to prepare a platinum paste, and the platinum paste is adjusted to a certain viscosity by use of a solvent etc.

The present invention can be applied without being limited to a platinum paste in a degraded state. For example, a platinum paste which remained after use and which is not expected to be reused because the amount is too small has been forced to be discarded heretofore irrespective of whether the platinum paste is degraded or not. In the present invention, even such a platinum paste which is not degraded can be treated for recovery of the metal powder and recycling of the paste.

The metal powder recovered in the present invention has properties equivalent to those at the time of production of the platinum paste, and can be used as a constituent material of the platinum paste. The metal powder can be recycled as a platinum paste by mixing the metal powder with a new solvent, resin and the like. The metal powder after the heating step may be subjected to a pretreatment such as cleaning and crushing. When the platinum paste contains other solid component such as a ceramic in addition to the metal powder, the solid component is also recovered through the heating step, and also in this case, the recovered metal powder and solid component can be recycled into a new platinum paste by mixing a solvent etc. with the metal powder and solid component.

In recycling of the platinum paste, a new metal powder may be added to the recovered metal powder, followed by mixing a solvent etc. to the metal powder. This is intended to, for example, adjust the metal powder content according to a use purpose for the platinum paste to be recycled. A solid component such as a ceramic may be newly added.

### Advantageous Effects of the Invention

In the method for recovering a metal powder from a platinum paste of the present invention, a reusable metal powder can be recovered from the platinum paste in a small number of steps as described above. This recovery method can be carried out at a low cost, and causes only a small loss of platinum. The present invention can contribute to reduction of the costs of platinum pastes and electrode components to be used in the platinum pastes, and effective utilization of resources.

### Brief Description of the Drawings

Fig. 1 is a view illustrating the results of TG-DTA analysis of a platinum paste in a first embodiment.
Fig. 2 is a view illustrating a change rate in surface area of a platinum powder in the first embodiment.
Fig. 3 is a view illustrating a change rate in specific surface area of a solid component recovered repeatedly from a platinum paste in a second embodiment.
Fig. 4 is a view illustrating a change rate in resistance of an electrode produced from a platinum paste recycled repeatedly in the second embodiment.
Fig. 5 is a view illustrating the results of measuring the electrode properties of an electrode produced from a platinum paste recycled in a third embodiment.

### Description of Embodiments

First embodiment: Hereinafter, embodiments of the present invention will be described. In this embodiment, a preliminary test for estimating preferred conditions for recovering a metal powder through a heating test was conducted for a platinum paste which is not degraded (within 1 hour after production). The platinum paste used here was obtained by mixing a platinum powder (particle size: 0.7 µm) with texanol as a solvent, and further mixing ethylcellulose as a resin.

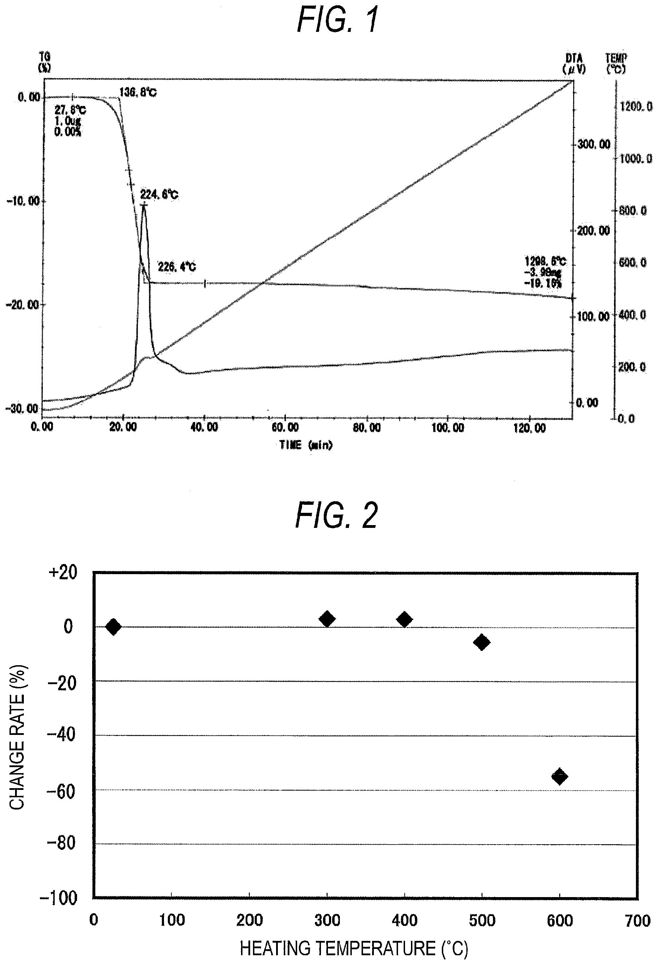

20 mg of the platinum paste was taken, and subjected to TG-DTA analysis. The platinum paste was heated at a constant rate with a temperature elevation rate of 10°C/min during analysis, and a weight loss was measured. Fig. 1 illustrates the results of TG-DTA analysis. The platinum paste started losing the mass at 136.8°C, and stopped losing the weight at 250°C or lower. This suggests that an organic component including a solvent and a resin is eliminated at 250°C or lower. Ethyl cellulose as a resin component was confirmed to be eliminated by the catalytic action of the platinum powder. Because the analyzed amount in TG-DTA analysis is very small, there is the possibility that the measured temperature at which the organic component was eliminated was lower than actual temperature, but it is thought when the heating temperature is 300°C or higher, the organic component can be completely removed.

Next, the platinum paste was heated and held at each temperature of 300 to 600°C for 30 minutes to remove the organic component to recover a platinum powder, the specific surface area of the platinum powder was measured, and a change rate with respect to the specific surface area before production of the paste was evaluated. The result of the evaluation is shown in Fig. 2.

Fig. 2 illustrates the result showing a change rate in specific surface area of the recovered platinum powder, and for this platinum powder, the specific surface area decreases in heating at 500°C. A decrease in specific surface area may be caused by sintering of the platinum powder, and therefore it can be determined that the heating temperature is required to be 500°C or lower for preventing a decrease in specific surface area.

Thus, from this embodiment, it was shown that the platinum powder may be recovered from the platinum paste. In heating of the platinum paste, the organic component was combusted and removed by the catalytic action of the platinum powder. It was also shown that the platinum powder obtained by removing the organic component in this way can be expected to resist a change in physical properties due to sintering etc. when the upper limit of the heating temperature is appropriately set, so that the platinum powder may be reused.

Second embodiment: In this embodiment, a test was conducted in which a platinum powder was recovered from a predetermined platinum paste, and the platinum powder was recycled into a new platinum paste. The recovery of the platinum powder and recycling of the paste were repeated multiple times. In this embodiment, the following two platinum pastes were used. The platinum paste was used within 1 hour after production.
(I) Platinum paste I···mixture of a platinum powder (particle size: 0.7 µm) with α-terpineol as a solvent and ethylcellulose as a resin. Solid component content: 90.9%.
(II) Platinum paste II···mixture of a platinum powder (particle size: 0.7 µm) and an alumina powder with α-terpineol as a solvent and ethylcellulose as a resin. Solid component content: 89.1%.

In this embodiment, the platinum pastes I and II were subjected to a two-stage heating treatment in which the platinum paste was heated at 150°C, and then heated at 350°C as a method for recovering a platinum powder (solid component). Specifically, first the platinum paste was heated and held at 150°C for 60 minutes, then heated to 350°C, and held for 30 minutes. The solid component (platinum powder and alumina powder) was recovered from the two-stage heating treatment, and the same solvent was mixed with the solid component to recycle the platinum paste. The recovery of the solid component and recycling of the solid component into the paste were considered as one set, and performed three times, and the specific surface area of the solid component recovered at each time was measured (the sum of the specific areas of the platinum powder and the alumina powder for the paste II). For the platinum paste recycled at each time, electrodes were prepared, and the resistivity was measured. The resistivity was measured in the following manner: three linear electrodes of 0.5 mm × 20 mm were printed, the thicknesses and the resistance values of the electrodes were measured, the average was determined, and the resistance value per thickness (mΩ/□/10µm) was calculated.

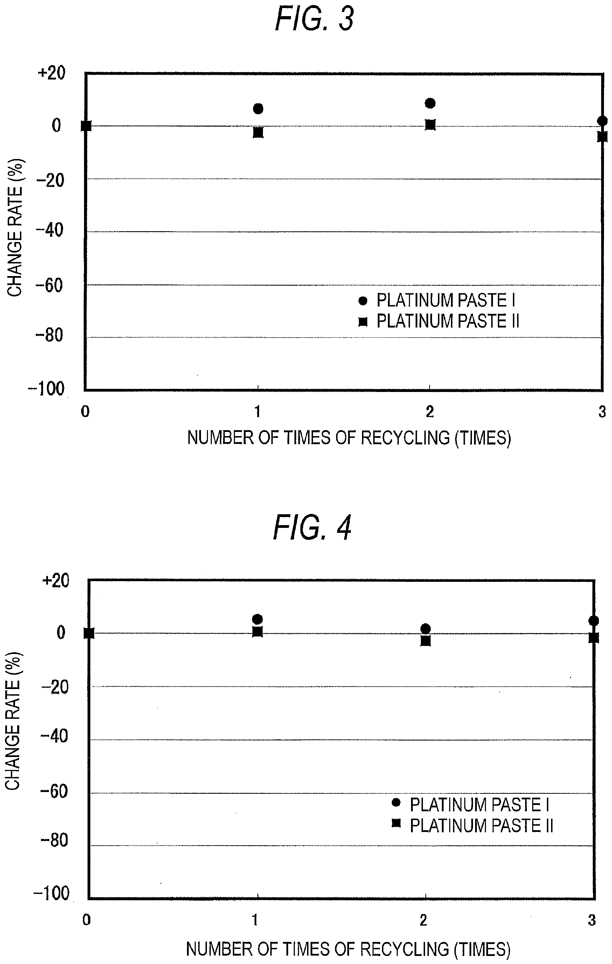

The change rate in each of specific surface area of the powder and resistivity as measured at each time was calculated based on the measured value for the initial platinum paste before recycling. The results are shown in Fig. 3 (powder specific surface area) and Fig. 4 (resistivity).

It is apparent from Fig. 3 that under the heating condition (two-stage heating at 150°C and 350°C) in this embodiment, the properties of the platinum powder are not changed even when the platinum powder (solid component) is repeatedly recovered multiple times. Fig. 4 shows that the platinum paste recycled in this way is almost unchanged from the initial state.

Third embodiment: In this embodiment, recovery of a platinum powder and recycling of a paste were performed for a platinum paste degraded due to long period storage. The platinum paste treated here is a platinum paste for formation of an electrode in an oxygen sensor. The platinum paste is a dispersed paste (solid component content: 83.71%) obtained by mixing powders: a platinum powder, a zirconia powder, an alumina powder and a diamond powder with α-terpineol as a solvent, and further adding ethylcellulose as a resin for imparting a viscosity. The platinum paste was stored for 4 months after production, and the viscosity of the platinum paste increased from 260 Pa·s (at the time of production) to 508 Pa·s (after elapse of 4 months).

5 g of the degraded paste was heated at 450°C for 30 minutes to eliminate the organic component, the solid component was then recovered, and a fresh solvent was mixed with the solid component to recycle a platinum paste.

For the degraded platinum paste, the weight of the solid component was 4.18 g after the platinum paste was heated at 450°C for 30 minutes. Accordingly, 99% of the organic component was removed by the heat treatment. A solvent (α-terpineol) and a resin (ethylcellulose) were mixed with the solid component to produce a platinum paste having the same concentration as that of the original platinum paste (before degradation). The viscosity of the recycled platinum paste was measured, and the result showed that the viscosity was 268 Pa·s, and almost the same as the viscosity of the platinum paste before degradation (viscosity: 260Pa·s).

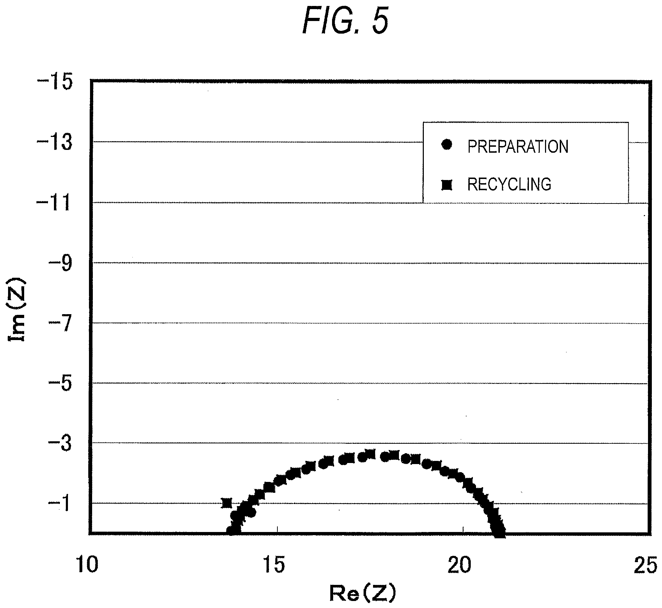

Next, the recycled platinum paste was applied and fired to form a 10 µm-thick electrode on a YSZ green sheet, and electrode properties were evaluated. For evaluation of the electrode properties, impedance measurement was performed from 100 kHz to 0.1 Hz with a bias-free amplitude of 20 mV at 700°C in the air. The measurement was also performed for the platinum paste before degradation. The results of the measurement are shown in Fig. 5. The recycled paste has almost the same electrode properties as those of the platinum paste before degradation. Accordingly, it was shown that the platinum powder and solid component recovered in this embodiment were also effective for recycling of a degraded platinum paste.

For the degraded platinum paste, a platinum powder was recovered by two-stage heating (two-stage heating at 150°C and 450°C) as a heating treatment as in the second embodiment, and similar impedance measurement was performed. The recycled paste here showed the same electrode properties as those of the platinum paste before degradation.

Fourth embodiment: In this embodiment, recovery of a platinum powder and recycling of a paste were performed for a plurality of platinum pastes having different types of organic solvents and resins as organic components. The same platinum powder (particle size: 0.7 µm) as in the first embodiment, and a platinum-25 mass% palladium alloy powder were provided, and various kinds of organic solvents and resins were kneaded with the powders to produce platinum pastes (solid component content: 90%). The viscosity was measured, and the platinum pastes were stored for 1 month to be degraded. After elapse of 1 month, the viscosity was measured to confirm that the viscosity was changed by 10 to 15%.

5 g of each of the degraded platinum pastes was taken, and heated for 30 minutes at each of temperatures of 200°C, 250°C, 300°C, 400°C, 500°C and 550°C. The weight of the recovered solid component was measured to determine the organic component removal ratio. The surface area of the recovered platinum powder was measured. Further, an organic component identical to that at the time of production was mixed with the recovered platinum powder to recycle a platinum paste, and the viscosity of the platinum paste was measured. Possibility of platinum powder recovery was determined from the organic component removal ratio, the change rate in specific surface area of the platinum powder and the viscosity of the recycled platinum paste, each of which was measured as described above.

The results of determining possibility of platinum powder recovery in this embodiment are shown in Table 1. For determination criteria, samples for which the organic component removal ratio was less than 50% was rated "×", samples for which the organic component removal ratio was 50% or more and less than 95% was rated "Δ", and all of these samples were determined as being "recovery impossible". Samples for which the organic component removal ratio was 95% or more, and the difference between the viscosity of the recycled platinum paste and the viscosity of the platinum paste at the time of production was within ±10% were determined as being "platinum powder recovery possible" and rated "⊙". Samples for which the organic component removal ratio was 95% or more, but the difference between the viscosity of the recycled platinum paste and the viscosity of the platinum paste at the time of production exceeded ±10% were rated "○" based on the assumption that substantially the platinum powder was not recovered. Further, for the specific surface area of the recovered platinum paste, samples for which the specific surface area decreased by more than 10% were rated "NG" because recovery of the platinum powder could be impossible based on the determination that sintering occurred. Table 1 shows the results of measuring the removal ratio in heating of a resin alone as a reference to examples.

**[Table 1]**

| No. | Paste configuration | | | Heating temperature | | | | | |
|---|---|---|---|---|---|---|---|---|---|
| | Solid component | Organic solvent | Resin | 200°C | 250°C | 300°C | 400°C | 500°C | 550°C |
| 1 | Pt powder | Texanol | Ethylcellulose | Δ | ○ | ⊙ | ⊙ | ⊙ | NG |
| 2 | | α-terpineol | | Δ | ○ | ⊙ | ⊙ | ⊙ | NG |
| 3 | | Butyl carbitol | | Δ | ○ | ⊙ | ⊙ | ⊙ | NG |
| 4 | | Texanol | Alkyd resin | Δ | ○ | ⊙ | ⊙ | ⊙ | NG |
| 5 | | | Polyvinyl butyral | × | Δ | ⊙ | ⊙ | ⊙ | NG |
| 6 | PtPd powder | Texanol | Ethylcellulose | Δ | ○ | ⊙ | ⊙ | ⊙ | NG |
| 7 | Ethylcellulose alone | | | × | × | × | × | Δ | - |
| 8 | Polyvinyl butyral alone | | | × | × | × | Δ | Δ | - |

| | | | | | | | | | |
|---|---|---|---|---|---|---|---|---|---|
| x: organic component removal ratio is less than 50%. Δ: organic component removal ratio is 50% or more and less than 95%. ○: organic component removal ratio is 95% + change in viscosity of recycled paste is more than 10%. ⊙: organic component removal ratio is 95% + change in viscosity of recycled paste is 10% or less. NG: recovery is impossible due to sintering of powder. | | | | | | | | | |

From Table 1, even when the organic solvent and the resin as the organic component were variously changed, a platinum powder was recovered by heating at 300 to 500°C, and recycled into a platinum paste (Nos. 1 to 6). Further, a metal powder was successfully recovered from a metal paste having a platinum-palladium alloy as the metal powder (No. 6).

From the results of studies in this embodiment, it can be confirmed that possibility of recovery of the platinum powder from the platinum paste is also influenced by the catalytic action of the platinum powder itself. From the results of No. 7 and No. 8, the resin which is not volatile unlike the solvent cannot be sufficiently removed alone even by heating at a relatively high temperature, and remains. The resin is almost totally fired and eliminated by heating at 300°C or higher when it exists in the platinum paste, i.e. it coexists with the platinum powder. This may be because the catalytic action of platinum (platinum alloy) accelerates oxidation and decomposition of the resin.

### Industrial Applicability

As described above, according to the present invention, a metal powder equivalent to that in the initial stage of production can be recovered in simple and easy steps from a platinum paste which would have been discarded and sent to a recovery step previously. Accordingly, a platinum paste can be simply and easily recycled. In the present invention, the loss of platinum can be expected to decrease, leading to a reduction in cost of the platinum paste. The present invention relates to a technique for recycling platinum, a precious metal receiving attention in terms of price fluctuation, and contributes to effective utilization of platinum.

## Claims

1. A method for recovering a metal powder from a platinum paste formed by mixing a solid component composed of a metal powder including at least a platinum powder or a platinum alloy powder and an organic component including at least an organic solvent, comprising the steps of
heating the platinum paste at a recovery temperature set in a temperature range of 300°C or higher and 500°C or lower, thereby to remove the organic component.

2. The method for recovering a metal powder from a platinum paste according to claim 1, comprising the steps of treating a platinum paste corresponding to at least one of the following conditions:
(a) a viscosity has been changed by ±20% or more compared with the viscosity at the time of production;
(b) one or both of the viscosity ratio of 0.4/s to 4/s (η0.4/η4) or the viscosity ratio of 4/s to 20/s (η4/η20) as measured by Brookfield viscometer are changed by 10% or more with respect to the viscosity ratio at the time of production; and
(c) a solid component content has been changed by ±2% or more with respect to the solid component content at the production time.

3. The method for recovering a metal powder from a platinum paste according to claim 1 or 2, wherein the organic solvent as the organic component includes ethylene glycol, propylene glycol, ethylene glycol monophenyl ether, benzyl alcohol, kerosene, γ-butyrolactone, N-methylpyrrolidone, butyl carbitol, butyl carbitol acetate, terpin oil, α-terpineol, texanol, menthanol and/or menthanol acetate.

4. The method for recovering a metal powder from a platinum paste according to any of claims 1 to 3, wherein the organic component includes a resin.

5. The method for recovering a metal powder from a platinum paste according to claim 4, wherein the resin includes at least one of a cellulose derivative, a butyral resin, a polyvinyl acetate resin, an amino-based resin and an alkyd resin.

6. The method for recovering a metal powder from a platinum paste according to any of claims 1 to 5, wherein the solid component includes at least one of a ceramic powder and insoluble particles.

7. The method for recovering a metal powder from a platinum paste according to any of claims 1 to 6, wherein the platinum paste is preliminarily heated at 150°C to 200°C before being heated at a recovery temperature.

8. A method for recycling a platinum paste, comprising the steps of
producing a platinum paste by mixing an organic component, which includes at least an organic solvent, with a metal powder recovered by the method defined in any of claims 1 to 7.
